# EUROPEAN PATENT SPECIFICATION

(11) **EP 0 742 032 B1**
(45) Date of publication and mention of the grant of the patent: **26.01.2000**
(21) Application number: 96106165.2
(22) Date of filing: 19.04.1996
(51) Int. Cl.: A62D 3/00, C03C 1/00

(54) **Process for vitrifying compound materials containing asbestos**
Verfahren zur Verglasen von Asbest enthaltende Verbundwerkstoffen
Procédé pour la vitrification des matériaux composites contenant de l'amiante

(30) Priority: 03.05.1995 IT MI950884
(43) Date of publication of application: 13.11.1996
(73) Proprietor: ENEL S.p.A., I-00198 Roma (IT)
(72) Inventor: De Stefano, Luca, 72100 Brindisi (IT); Dinelli, Giorgio, 72100 Brindisi (IT)
(74) Representative: Ferraiolo, Ruggero

(56) References cited:
- EP-A- 0 684 054
- WO-A-94/23801
- DE-A- 4 004 201
- DE-A- 4 211 161
- DATABASE WPI Section Ch, Week 9105 Derwent Publications Ltd., London, GB; Class J09, AN 91-033567 XP002017907 & JP-A-02 303 585 (KUBOTA CORP) , 17 December 1990

## Description

The present invention concerns a process for vitrifying compound materials containing asbestos, simply defined CMCA herein, and especially waste from the removal of insulating and roofing elements of asbestos cement.

The purpose of the present invention is to render the waste containing asbestos inert in that they represent a serious and yet unsolved environmental problem.

The main varieties of asbestos are shown in Table 1.

Asbestos has been used in a number of ways and for many years owing to its peculiar characteristics as a heat-resistant, sound-absorbing material, with high traction resistance, flexibility and wear-resistance. Since the appearance of certain serious illnesses of the breathing system were correlated to the presence of asbestos fibres in the air the use of the mineral dropped, until it was definitely banned. In Italy law n° 257 of the 27/3/92 rules that the use of asbestos was to cease and that the danger of asbestos pollution was to be eliminated wherever there are artifacts containing this mineral.

**TABLE 1**

| ***Mineral*** | ***Variety*** | ***Chemical composition*** |
|---|---|---|
| Krysotile | serpentine | Mg₃Si₂O₅(OH)₄ |
| Actinolite | amphibole | Ca₂(FeMg)₅Si₈O₂₂(OH)₂ |
| Amosite | amphibole | (FeMg)₇Si₆O₂₂(OH)₂ |
| Antofillite | amphibole | Mg₇Si₈O₂₂(OH)₂ |
| Crocidolite | amphibole | Na₂Fe₁₀Si₁₆O₄₆(OH)₂ |
| Tremolite | amphibole | Ca₂Mg₅Si₈O₂₂(OH)₂ |

The removal of materials containing asbestos as a method for avoiding pollution by asbestos fibres in any case means having to dispose of, at a considerable cost, the CMCAs obtained, in category II, type C, disposal plants. The proposed invention has the purpose of de-classing, according to current laws, the residues of materials containing asbestos by converting them into vitreous materials, lacking the fibrous features of asbestos minerals that are harmful to human health, hence making them disposable with category II, type B, disposal plants. Furthermore, the product obtained could be re-used as slag in blast furnaces of the coloured glass industry, down-stream from its being listed as secondary raw material, in compliance with art. 2 of law n° 475 of the 9/11/88 and later integrations.

All types of asbestos, because they contain a part of hydroxyl water, are specially sensitive to dry heating. In this way they lose their toxic characteristics because they are transformed not only in their chemical composition, but above all also in their structure, transforming into other silicates or oxides. Already at temperatures above 200 °C amphibole asbestoses issue their content of hydroxyl in the form of water. Between 600°C and 1000°C in all types of asbestos the complete transformation into the related crystalline phases is terminated as a consequence of the loss of hydroxyl groups.

Especially with Krysotile, at temperatures close to 980°C, the anhydrate splits into forsterite (Mg₂SiO₄) and silica (SiO₂); the reaction is irreversible. At higher temperatures (1200°C for Crocidolite, 1500°C for Krysotile) the asbestoses melt into amorphous glass in that as stated they feature a high content of oxides typical to all glass available on the market.

On the basis of these observations there are various patents that propose to render residues containing asbestos inert by means of thermal treatment (Mason, USA N° 5.085.838 dated 4/2/92) by combining the melted material with combustion wastes (Ek USA N° 5.096.692 dated 17/3/92) or with mineralized agents (Richter, USA N° 4.808.198 dated 28/2/89).

Other patents present vitrifying processes (Roberts & Johnson, USA N⁰ 4.678.493 dated 7/7/87; Adelio et al., ITALY N° 48.313 A/89, deposited 28/8/89) in which the asbestos waste is mixed with broken glass or conventional residues, also toxic and noxious, having been previously appropriately pre-treated, to form vitreous products in which asbestos is absent, because irreversibly modified.

Prior art very close to the present process is shown in JP-A-02 303 585 and relevant WPl and Patent Abstracts of Japan; a process is disclosed therein for converting asbestos containing materials in a vitreous slag, such materials being mixed with ash from municipal waste incinerator to give a product that, anyway, has poor cristalline properties. Document DE-A-40 04 201 is also known that discloses use of flux materials to reduce the melting point of asbestos waste compounds.

The procedure according to the present invention is characterized in that it uses a secondary raw material light ashes from bitumen coal as a vitrifying agent and hence, differently from some quoted above, does not require of any special pre-treatment of the materials containing asbestos, except the known shredding of the same and mixing the ashes with an appropriate temperature lowering flux.

The process comprises a thermal vitrifying cycle, conducted in either an electric or a methane melting furnace, that lasts about 3 hours, operated at maximum temperatures between 1000°C and 1300°C (the temperature at which the light ashes melt) that ensures the full thermal corruption of all types of asbestos. The percentage of waste materials containing asbestos may vary between 40 and 60% of the weight of the mixture, with the addition of ashes to which a quantity between 5 and 15% of temperature lowering flux (Na₂B₄O₇, Na₂CO₃, etc.) weight has been added, according to the type of CMCA and of the composition of the matrix in which the asbestos was previously held.

The energy consumption required for vitrifying one kilogram of CMCA is about 1.55 kWh; the vitrified material features a loss in volume equal to about 80% of the initial volume and a slight loss in weight owing to the combustion of residual coal contained in the ashes.

The content in oxides (SiO₂, Fe₂O₃, CaO, Al₂O₃, Na₂O, MgO) confirm that there may be an advantageous re-use of the product in the coloured hollow glass industry, thanks to the presence of ferrous oxide.

The use of the process proposed leads to the following advantages:
1) the environmental risk problems linked to the conditioning, stockage and control of the CMCAs in the disposal plant are overcome.
2) economic convenience arising from the degrading of the residues according to the classification as per DPR 915/82 and to the reduction in volume of the vitrified substance compared to the original volume of residues.
3) use and consequent evaluation of a secondary raw material at extremely contained costs and easily procurable such as light ashes from bituminous coals combustion.
4) possibility of future listing of the vitreous product obtained as secondary raw materials relatively to the industrial production of coloured hollow glass.
5) the X-ray diffractometry analysis, used according to the DPR 915/82 to classify CMCAs to be disposed of in category II, type B, plants, in various samples examined, detected total absence of asbestos fibres confirming the safety of the product obtained. The tests for yield in acetic acid 0.5 M, according to IRSA standards, confirm full environmental compatibility according to the limits set by law 319/76.
6) full homogeneousness of the vitreous melted material is reached so as to allow stirring thereof.

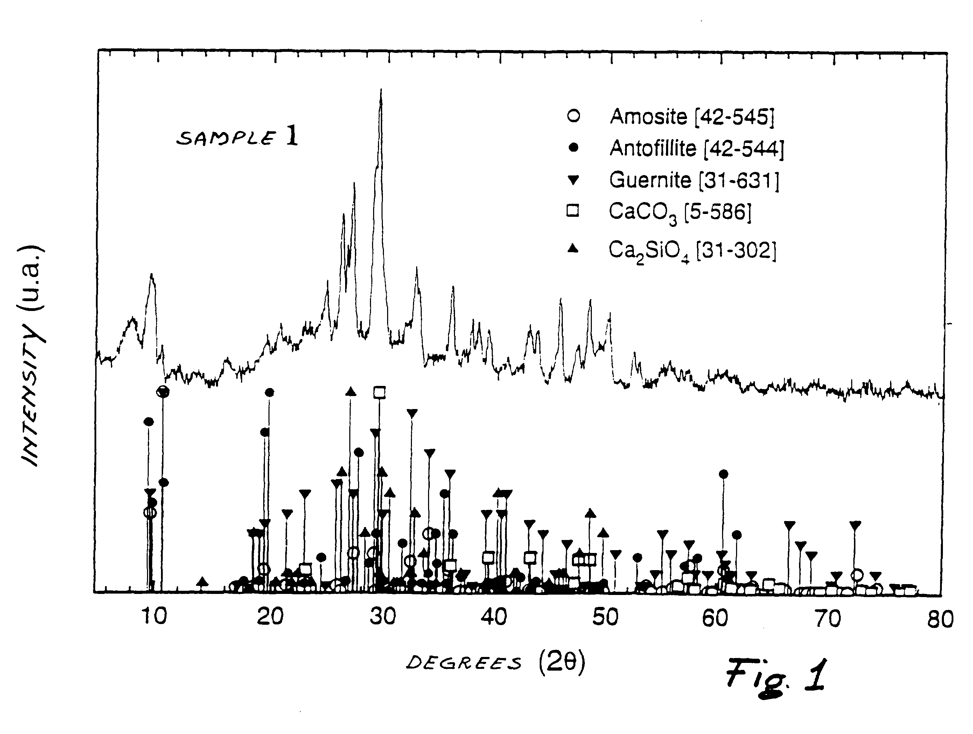

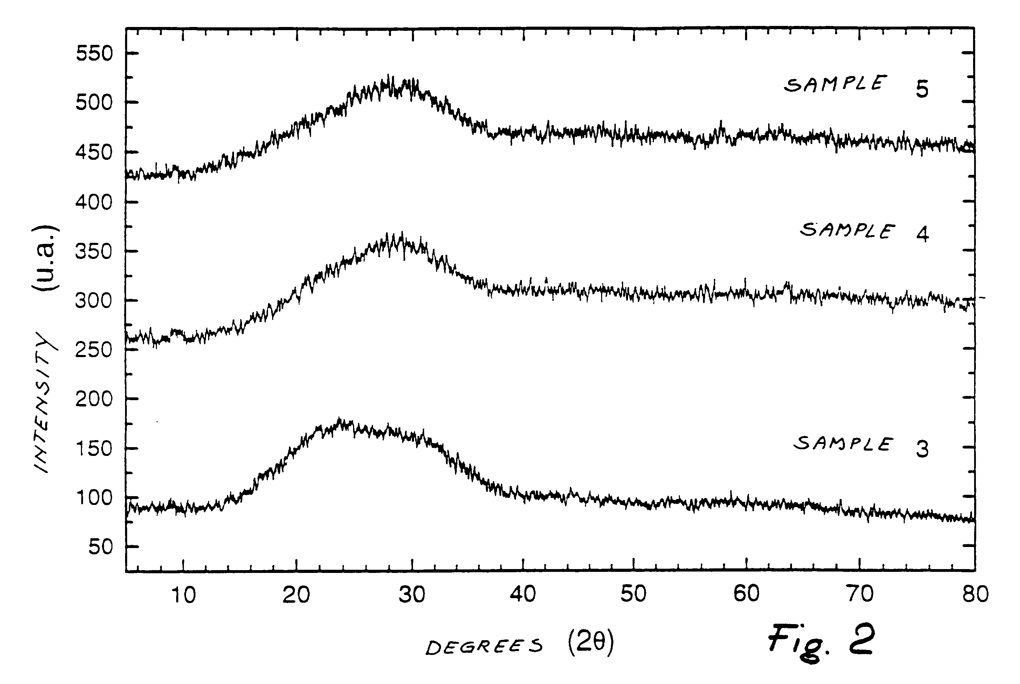

The attached figures 1 and 2, that are diagrams of the X-ray diffractometry spectrums, provide both the identification of the asbestos contained in the CMCAs, and the check of the structural change and consequent inertia of the same.

Fig. 1 shows the diffractometry spectrum of Sample 1, a spectrum relative to the CMCA as it is that shows a series of characteristic peaks that allow to identify the type of materials containing asbestos contained in Sample 1.

Fig. 2 shows the diffractometric spectrums of Samples 3, 4 and 5 relative to the vitrified products of mixtures with different contents of CMCA that feature the characteristic trend of amorphous materials in which there are no crystalline forms.

## Claims

1. A process for vitrifying compound materials containing asbestos providing for shredding such compound, mixing it with coal ashes and a temperature lowering flux **characterized** in that the process is carried out in an electric or gas furnace at a maximum temperature between 1000°C and 1300°C for about three hours and the coal ashes are light ashes from bitumen coals to cause such a full homogeneousness of the vitreous melted material as to allow stirring thereof

## Patentansprüche

1. Verfahren zum Vitrifizieren von asbesthaltigen Verbundmaterialien, bei dem das Verbundmaterial zerkleinert und mit Kohlenasche sowie einem temperatursenkenden Flußmittel gemischt wird,
dadurch **gekennzeichnet,** daß das Verfahren in einem Elektroofen oder Gasofen bei einer Maximaltemperatur zwischen 1000°C und 1300°C während etwa 3 Stunden durchgeführt wird und die Kohlenasche Leichtasche von Bitumenkohle ist so, daß eine derart vollständige Homogenität des geschmolzenen glasigen Materials bewirkt wird, daß dieses gerührt werden kann.

## Revendications

1. Procédé de vitrification de composés de matières contenant de l'amiante, comprenant une pulvérisation de tels composés, leur mélange avec des cendres de charbon et un flux abaissant la température,
caractérisé en ce qu'
on effectue le procédé dans un four électrique ou à gaz à une température maximale comprise entre 1000°C et 1300°C pendant environ trois heures, et les cendres de charbon sont des cendres légères de charbons de bitumes, pour assurer une homogénéisation complète de la matière vitreuse fondue et permettre son agitation.
